# EUROPÄISCHE PATENTSCHRIFT

(11) **EP 1 289 068 B1**
(45) Veröffentlichungstag und Bekanntmachung des Hinweises auf die Patenterteilung: **10.11.2004**
(21) Anmeldenummer: 02015904.2
(22) Anmeldetag: 17.07.2002
(51) Int. Cl.: H01R 9/05

(54) **Einrichtung zum elektrisch leitenden Kontaktieren eines abschnittweise abisolierten Aussenleiters eines Koaxialkabels**
Device for connecting an outer cable of a partially stripped coaxial cable
Dispositif de connexion d'un conducteur externe partiellement dénudé d'un câble coaxial

(30) Priorität: 16.08.2001 DE 20113219 U
(43) Veröffentlichungstag der Anmeldung: 05.03.2003
(73) Patentinhaber: Daume Patentbesitzgesellschaft mbH & Co. KG, 30938 Burgwedel (DE)
(72) Erfinder: Daume, Britta, 30938 Burgwedel (DE)
(74) Vertreter: Wagner, Carsten

(56) Entgegenhaltungen:
- EP-A- 0 982 524
- EP-A- 0 987 483
- DE-A- 19 842 380

## Beschreibung

Die Erfindung betrifft eine Einrichtung der im Oberbegriff des Anspruchs 1 genannten Art zum elektrisch leitenden Kontaktieren eines abschnittsweise abisolierten Außenleiters eines Koaxialkabels.

Derartige Einrichtungen sind allgemein bekannt, beispielsweise durch EP 0 744 788 B1, EP 0 987 483 B1, EP 0 982 524 A und EP 0 978 678 B1.

Durch EP 0 982 524 B1 ist eine Einrichtung der betreffenden Art zum elektrisch leitenden Kontaktieren eines abschnittsweise abisolierten Außenleiters eines Koaxialkabels, der gegenüber einer Ummantelung des Koaxialkabels radial zurückspringt, bekannt, die einen als um das Koaxialkabel spannbare Schelle ausgebildeten Grundkörper aufweist. Die bekannte Einrichtung weist ferner eine durch Dichtlippen gebildete Dichtung auf, mit dem der Grundkörper in Montagesposition der Einrichtung dichtend an der Ummantelung des Koaxialkabels anliegt. Bei der aus der Druckschrift bekannten Einrichtung weist der Grundkörper ein Schellenband aus Metall auf, das in elastisches Material eingebettet ist, das an der in Montagesposition dem Koaxialkabel zugewandten Seite die Dichtlippen bildet. Die Dichtlippen sind somit an das elastische Material des Grundkörpers angeformt. Die bekannte Einrichtung weist ferner Kontaktmittel zum Herstellen einer elektrisch leitenden Verbindung zwischen dem Außenleiter des Koaxialkabels und einem Leiter, beispielsweise einem Erdungskabel auf.

Mit der aus der Druckschrift bekannten Einrichtung ist sowohl eine zuverlässige Abdichtung eines Kontaktbereiches, in dem die Kontaktmittel in elektrisch leitender Verbindung mit dem Außenleiter des Koaxialkabels stehen, als auch ein zuverlässiger elektrisch leitender Kontakt zwischen den Kontaktmitteln und dem Außenleiter erzielt. Darüber hinaus ist die aus der Druckschrift bekannte Einrichtung einfach und kostengünstig herstellbar.

Der Erfindung liegt die Aufgabe zugrunde, eine Einrichtung der im Oberbegriff des Anspruchs 1 genannten Art anzugeben, deren Herstellung weiter vereinfacht und die somit noch kostengünstiger herstellbar ist.

Diese Aufgabe wird durch die im Anspruch 1 angegebene Lehre gelöst.

Erfindungsgemäß besteht die Dichtung aus wenigstens einem Streifen eines plastisch oder elastisch verformbaren Dichtungsmateriales, der an der radialen Innenfläche des Grundkörpers gehalten ist und sich an der radialen Innenfläche des Grundkörpers entlang des Umfanges eines Kontaktbereiches, in dem die Kontaktmittel in elektrisch leitender Verbindung mit dem Außenleiter des Koaxialkabels stehen, im wesentlichen ohne Unterbrechung um den Kontaktbereich herum erstreckt.

Auf diese Weise ist eine zuverlässige Abdichtung erzielt, ohne daß hierfür Dichtungen erforderlich sind, die an ein elastisches Teil des Grundkörpers angeformt sind. Aufgrund dessen ist bei der erfindungsgemäßen Einrichtung ein Teil aus elastischem Material, an das die Dichtlippen angeformt sind, nicht mehr erforderlich. Auf diese Weise ist die Herstellung der erfindungsgemäßen Einrichtung weiter vereinfacht und damit kostengünstiger gestaltet.

Ein wesentlicher Vorteil der erfindungsgemäßen Einrichtung besteht darin, daß sie besonders einfach im Aufbau ist. Darüber hinaus ist die erfindungsgemäße Einrichtung einfach zu montieren. Im einfachsten Falle besteht die erfindungsgemäße Einrichtung lediglich aus einem Blechteil, das den Grundkörper bildet, sowie der Dichtung. Sie ist damit besonders kostengünstig herstellbar.

Eine außerordentlich vorteilhafte Weiterbildung der erfindungsgemäßen Einrichtung sieht vor, daß der Grundkörper ein Schellenband aus elektrisch leitfähigem Material aufweist, an dem wenigstens ein einstückig mit dem Schellenband ausgebildeter Kontaktvorsprung aus elektrisch leitfähigem Material gebildet ist, der in Montagesposition der Einrichtung in Radialrichtung des Koaxialkabels derart über die Dichtlippen vorsteht, daß er an dem Außenleiter des Koaxialkabels anliegt und so die Kontaktmittel bildet. Bei dieser Ausführungsform ist der Aufbau der erfindungsgemäßen Einrichtung weiter vereinfacht, da ein separates Kontaktelement, das die Kontaktmittel bildet, nicht mehr erforderlich ist. Die Kontaktmittel sind vielmehr in das Schellenband integriert. Somit kann bei diesem Ausführungsbeispiel die Einrichtung im einfachsten Falle lediglich aus dem Schellenband, der Dichtung und Mitteln zum Spannen des Schellenbandes um das Koaxialkabel bestehen.

Eine vorteilhafte Weiterbildung der vorgenannten Ausführungsform sieht vor, daß der oder jeder Kontaktvorsprung durch eine zu der in Montagesposition dem zu kontaktierenden Körper zugewandten Seite des Grundkörpers hin vorstehende Zunge gebildet ist. Diese Ausführungsform ist besonders einfach im Aufbau und damit besonders kostengünstig herstellbar.

Um die Herstellung weiter zu vereinfachen, ist es bei der vorgenannten Ausführungsform zweckmäßig, daß die oder jede Zunge aus dem Schellenband ausgestanzt oder ausgeschnitten ist.

Eine zweckmäßige Weiterbildung der vorgenannten Ausführungsform sieht vor, daß durch Bildung der Zungen in dem Schellenband entstandene Öffnungen durch eine an der radialen Außenseite des Schellenbandes 6 angeordnete Abdeckung abgedeckt sind, derart, daß die Öffnungen verschlossen sind und ein Eindringen von Luft und/oder Feuchtigkeit durch die Öffnungen in den Kontaktbereich vermieden ist. Die Abdeckung kann beispielsweise durch eine Beschichtung, einen Streifen aus elastischen Material oder ein beliebiges anderes, die Öffnungen verschließendes Bauteil gebildet sein.

Falls erforderlich können die Kontaktmittel jedoch auch ein separates, mit dem Grundkörper verbindbares Kontaktelement aufweisen.

Um ein solches Kontaktelement einfach und damit kostengünstig zu gestalten, sieht eine Weiterbildung der vorgenannten Ausführungsform vor, daß das Kontaktelement aus einer Litze oder einem Geflechtband aus Metall oder aus profiliertem Bleck besteht.

Eine andere zweckmäßige Weiterbildung sieht vor, daß der Grundkörper einteilig und in Umfangsrichtung offen ausgebildet ist und an seinen beiden Enden abgewinkelte oder abgebogene Laschen aufweist, die in Montageposition mittels wenigstens einer Schraube miteinander verbindbar sind. Bei dieser Ausführungsform ist die Montage der erfindungsgemäßen Einrichtung besonders einfach gestaltet.

Eine außerordentlich vorteilhafte Weiterbildung der vorgenannten Ausführungsform sieht Mittel zur Begrenzung des Einschraubweges der Schraube vor, derart, daß eine Zusammendrückung der Dichtung beim Anziehen der Schraube definiert erfolgt. Auf diese Weise ist während der Montage der erfindungsgemäßen Einrichtung eine zu geringe oder zu starke Zusammendrückung der Dichtung vermieden, so daß eine besonders zuverlässige Abdichtung erzielt ist.

Die Dichtung kann aus einem beliebigen, plastisch oder elastisch verformbaren Material bestehen. Weiterbildungen sehen vor, daß die Dichtung aus einem Elastomer und/oder Butyl oder dergleichen elastisch verformbarem Dichtungsmaterial besteht. Derartige Dichtungen sind einfach und damit kostengünstig herstellbar.

Die Erfindung wird nachfolgend anhand der beigefügten, stark schematisierten Zeichnung näher erläutert.

Es zeigt:
- Fig. 1: eine Perspektivansicht eines Ausführungsbeispieles einer erfindungsgemäßen Einrichtung,
- Fig. 2: eine Ansicht auf die radiale Innenfläche der Einrichtung gemäß Fig. 1,
- Fig. 3: einen Axialschnitt durch die Einrichtung gemäß Fig. 1 in Montageposition und
- Fig. 4: einen Radialschnitt durch die Einrichtung gemäß Fig. 1 in Montageposition.

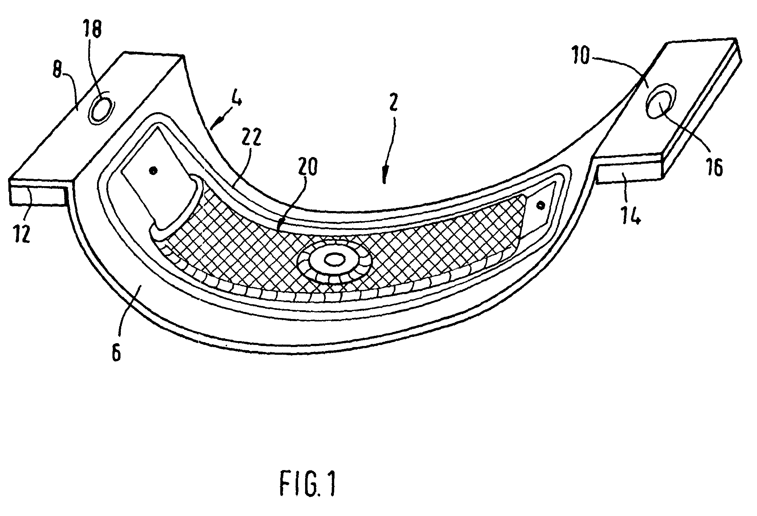

In Fig. 1 ist ein Ausführungsbeispiel einer erfindungsgemäßen Einrichtung 2 zum elektrisch leitenden Kontaktieren eines abschnittsweise abisolierten Außenleiters eines in Fig. 1 nicht dargestellten Koaxialkabels dargestellt. Die Einrichtung 2 weist einen Grundkörper 4 auf, der bei diesem Ausführungsbeispiel durch ein Schellenband 6 aus Metall gebildet ist, das an seinen Enden abgewinkelte Laschen 8, 10 aufweist, die mit Verstärkungen 12, 14 versehen sind. Die Laschen 8, 10 sind in Montageposition der Einrichtung mittels einer in Fig. 1 nicht dargestellten Schraube miteinander verbindbar, die sich in Montageposition durch eine in der Lasche 10 gebildete Durchgangsbohrung erstreckt und in eine in der Lasche 8 gebildete Durchgangsbohrung 18 eingeschraubt ist.

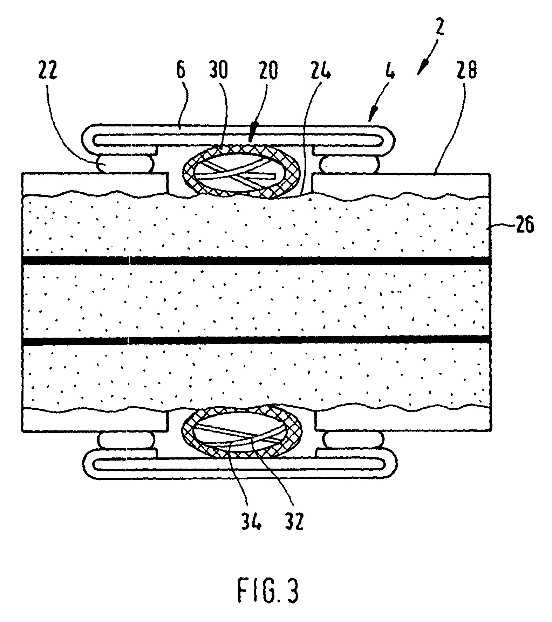

Die Einrichtung 2 weist ferner Kontaktmittel zum Herstellen einer elektrisch leitenden Verbindung zwischen dem Schellenband 6 und einem Leiter, beispielsweise einem Erdungskabel auf, die bei diesem Ausführungsbeispiel ein separates Kontaktelement 20 aufweisen, das weiter unten anhand von Fig. 3 näher erläutert wird.

Zum Abdichten eines Kontaktbereiches, in dem das Kontaktelement 20 in Montageposition der Einrichtung 2 an dem Außenleiter des Koaxialkabels anliegt, ist eine Dichtung 22 vorgesehen, die bei diesem Ausführungsbeispiel ausschließlich aus einem Streifen aus Butyl besteht, der an der radialen Innenfläche des Schellenbandes 6 gehalten ist und sich an der radialen Innenfläche des Schellenbandes 6 entlang des Umfanges des Kontaktelementes 20 ohne Unterbrechung um das Kontaktelement 20 herum erstreckt, derart, daß der Kontaktbereich in Montageposition der Einrichtung gegen ein Eindringen von Luft und/oder Feuchtigkeit abgedichtet ist. Anstelle eines Streifens aus Butyl oder einem anderen Dichtmaterial können auch mehrere Streifen verwendet werden, die in Umfangsrichtung des Kontaktelementes aufeinander folgen und ohne Unterbrechung aneinander anschließen und somit den Kontaktbereich durchgehend umgeben.

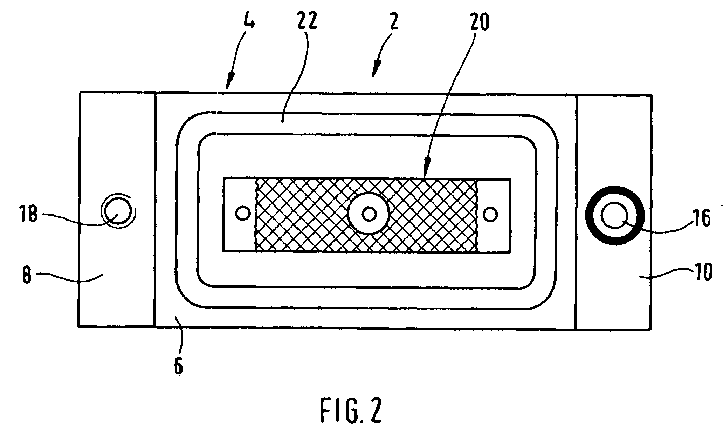

Fig. 2 zeigt eine Ansicht auf die radiale Innenfläche der Einrichtung 2.

Die Montage der Einrichtung 2 wird anhand von Fig. 3 näher erläutert. Zum Anschließen eines Außenleiters 24 eines Koaxialkabels 26 an ein nicht dargestelltes Erdungskabel wird zunächst eine Ummantelung des Koaxialkabels 26 in Axialrichtung über ein kurzes Stück entfernt. Daran anschließend wird das Schellenband 6 um das Koaxialkabel 26 herum gelegt, so daß die Dichtung 22 an der Ummantelung 28 des Koaxialkabels zur Anlage gelangt. Wie aus Fig. 3 ersichtlich ist, steht das Kontaktelement 20 in Radialrichtung so weit über die Dichtung 22 vor, daß es bei an der Ummantelung 28 anliegender Dichtung 22 an dem abisolierten Außenleiter 24 des Koaxialkabels 26 zur Anlage gelangt und auf diese Weise eine elektrisch leitende Verbindung zwischen dem Außenleiter 24 und dem Schellenband 6 herstellt. Da das Schellenband 6 aus Metall besteht, kann beispielsweise ein Erdungskabel an das Schellenband 6 angeschlossen werden, so daß der Außenleiter 24 des Koaxialkabels 28 in der gewünschten Weise geerdet ist.

Das Kontaktelement 20 besteht bei diesem Ausführungsbeispiel aus einer schlauchförmigen Litze 30 aus Metall, in deren Inneren ein Teil 32 aus profiliertem Blech aufgenommen ist, das Zungen 34 aufweist, die elastisch federnd ausgebildet sind und somit die Litze 30 einerseits gegen die radiale Innenfläche des Schellenbandes 6 und andererseits gegen den Außenleiter 24 des Koaxialkabels 26 vorspannen, so daß eine sichere elektrisch leitende Verbindung zwischen dem Schellenband 6 und dem Außenleiter 24 erzielt ist.

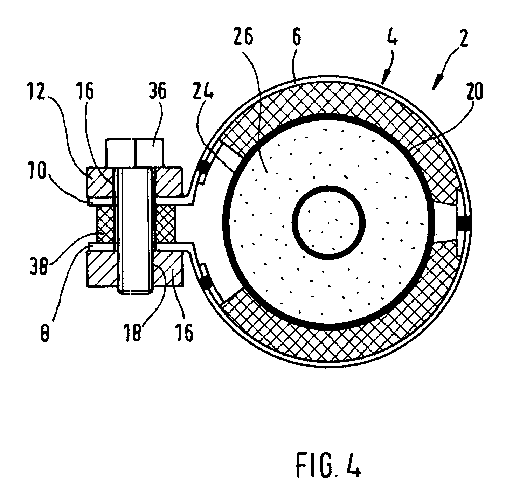

Zum Spannen des Schellenbandes 6 an dem Koaxialkabel 26 wird, wie in Fig. 4 dargestellt, eine Schraube 36 verwendet, die sich durch die Durchgangsbohrung 16 erstreckt und in die Gewindebohrung 18 eingeschraubt wird, so daß beim Anziehen der Schraube 36 das Schellenband 6 an dem Koaxialkabel gespannt wird. Beim Anziehen der Schraube 36 wird einerseits die Dichtung 22 zwischen dem Schellenband 6 und der Ummantelung 28 und andererseits das Kontaktelement 20 zwischen der radialen Innenfläche des Schellenbandes 6 und dem Außenleiter 24 zusammengedrückt. Da sich die Dichtung 22 ohne Unterbrechung entlang des Umfanges des Kontaktelementes 20 um dieses herum erstreckt, ist auf diese Weise ein Kontaktbereich, in dem das Kontaktelement 20 an dem Außenleiter 24 des Koaxialkabels 26 anliegt, gegen ein Eindringen von Luft und/oder Feuchtigkeit abgedichtet.

Die Einrichtung 2 weist ferner Mittel zur Begrenzung des Einschraubweges der Schraube 36 auf, die bei diesem Ausführungsbeispiel durch eine Distanzbuchse 38 gebildet sind, die in Montageposition zwischen den einander zugewandten Flächen der Laschen 8, 10 angeordnet ist, wie aus Fig. 4 ersichtlich. Die Distanzbuchse 38 begrenzt den Einschraubweg der Schraube 36 entsprechend ihrer axialen Länge, so daß eine Zusammendrückung der Dichtung 6 beim Anziehen der Schraube 36 definiert erfolgt. Auf diese Weise ist ein zu schwaches oder zu starkes Anziehen der Schraube 36 verhindert; aufgrund der definierten Zusammendrückung der Dichtung 22 ist eine sichere Abdichtung erzielt.

Statt eines separaten Kontaktelementes 20 können Kontaktmittel vorgesehen sein, die in das Schellenband 6 integriert sind. Beispielsweise können aus dem Schellenband sich in Axialrichtung und/oder Umfangsrichtung erstreckende Zungen ausgestanzt oder ausgeschnitten sein, die zu dem Außenleiter 24 hin vorstehen und an diesem anliegen. Hinsichtlich der Ausgestaltung dieser einstückig mit dem Schellenband 6 ausgebildeten Kontaktmittel wird auf die EP 0 982 524 B1 verwiesen, deren Offenbarungsgehalt hiermit durch Bezugnahme vollinhaltlich in die vorliegende Anmeldung einbezogen wird.

Falls die Kontaktmittel durch aus dem Schellenband 6 ausgestanzte oder ausgeschnittene Zungen gebildet sind, so ist auf der radialen Außenfläche des Schellenbandes 6 eine Abdeckung vorgesehen, die beispielsweise aus einem Streifen elastischen Materials bestehen kann und Öffnungen, die durch das Bilden der Zungen in dem Schellenband entstanden sind, dicht abdeckt, so daß ein Eindringen von Luft und/oder Feuchtigkeit durch diese Öffnungen in den Kontaktbereich zuverlässig vermieden ist.

## Patentansprüche

1. Einrichtung zum elektrisch leitenden Kontaktieren eines abschnittsweise abisolierten Außenleiters eines Koaxialkabels (26), der gegenüber einer Ummantelung des Koaxialkabels radial zurückspringt,
mit einem als um das Koaxialkabel spannbare schelle (2) ausgebildeten Grundkörper,
mit einer insbesondere durch Dichtlippen gebildeten Dichtung (22), mit der der Grundkörper in Montageposition der Einrichtung dichtend an der Ummantelung des Koaxialkabels anliegt und
mit Kontaktmitteln zum Herstellen einer elektrisch leitenden Verbindung zwischen dem Außenleiter (24) des Koaxialkabels (26) und einem Leiter, beispielsweise einem Erdungskabel,
**dadurch gekennzeichnet,**
**daß** die Dichtung (22) aus wenigstens einem Streifen eines plastisch oder elastisch verformbaren Dichtungsmateriales besteht, der bzw. die an der radialen Innenfläche des Grundkörpers (4) gehalten ist bzw. sind und sich an der radialen Innenfläche des Grundkörpers (4) entlang des Umfanges eines Kontaktbereiches, in dem die Kontaktmittel mit dem Außenleiter (24) des Koaxialkabels (26) in elektrisch leitender Verbindung stehen, ohne Unterbrechung um den Kontaktbereich herum erstreckt bzw. erstrecken, derart, daß der Kontaktbereich in Montageposition der Einrichtung (2) gegen ein Eindringen von Luft und/oder Feuchtigkeit abgedichtet ist.

2. Einrichtung nach Anspruch 1, **dadurch gekennzeichnet, daß** der Grundkörper (4) ein Schellenband (6) aus elektrisch leitfähigem Material aufweist, an dem wenigstens ein einstückig mit dem Schellenband ausgebildeter Kontaktvorsprung aus elektrisch leitfähigem Material gebildet ist, der in Montageposition der Einrichtung (2) in Radialrichtung des Koaxialkabels (26) derart über die Dichtung vorsteht, daß er an dem Außenleiter (24) des Koaxialkabels anliegt und so die Kontaktmittel bildet.

3. Einrichtung nach Anspruch 2, **dadurch gekennzeichnet, daß** der oder jeder Kontaktvorsprung durch eine zu der in Montageposition dem Koaxialkabel (26) zugewandten Seite des Grundkörpers (4) hin vorstehende Zunge gebildet ist.

4. Einrichtung nach Anspruch 3, **dadurch gekennzeichnet, daß** die oder jede Zunge aus dem Schellenband (6) ausgeschnitten oder ausgestanzt ist.

5. Einrichtung nach Anspruch 4, **dadurch gekennzeichnet, daß** durch Bildung der Zungen in dem Schellenband (6) entstandene Öffnungen durch eine auf der radialen Außenseite des Schellenbandes (6) angeordnete Abdeckung abgedeckt sind, derart, daß die Öffnungen verschlossen sind und ein Eindringen von Luft und/oder Feuchtigkeit durch die Öffnungen in den Kontaktbereich vermieden ist.

6. Einrichtung nach Anspruch 1, **dadurch gekennzeichnet, daß** die Kontaktmittel ein separates, an dem Grundkörper (4) gehaltenes Kontaktelement (20) aufweisen.

7. Einrichtung nach Anspruch 6, **dadurch gekennzeichnet, daß** das Kontaktelement (20) aus einer Litze oder einem Geflechtband aus Metall oder aus profiliertem Blech besteht.

8. Einrichtung nach Anspruch 1, **dadurch gekennzeichnet, daß** der Grundkörper (4) einteilig und in Umfangsrichtung offen ausgebildet ist und an seinen Enden abgewinkelte oder abgebogene Laschen (8, 10) aufweist, die in Montageposition der Einrichtung (2) mittels wenigstens einer Schraube (36) miteinander verbindbar sind.

9. Einrichtung nach Anspruch 8, **dadurch gekennzeichnet, daß** Mittel zur Begrenzung des Einschraubweges der Schraube (36) vorgesehen sind, derart, daß eine Zusammendrückung der Dichtung (22) beim Anziehen der Schraube (36) definiert erfolgt.

10. Einrichtung nach Anspruch 1, **dadurch gekennzeichnet, daß** die Dichtung (22) aus einem Elastomer besteht.

11. Einrichtung nach Anspruch 1, **dadurch gekennzeichnet, daß** die Dichtung (22) aus Butyl oder dergleichen plastisch verformbarem Dichtungsmaterial besteht.

## Claims

1. Device for the electrically conductive contacting of a sectionally stripped outer conductor of a coaxial cable (26) which is set back radially with respect to a sheath of the coaxial cable, with a base element formed as a clamp (2) which can be clamped around the coaxial cable, with a seal (22), in particular formed by sealing lips, with which, in the installed position of the device, the base element lies in a sealing manner on the sheath of the coaxial cable, and with contact means for establishing an electrically conductive connection between the outer conductor (24) of the coaxial cable (26) and a conductor, for example a grounding cable, **characterised in that** the seal (22) consists of at least one strip of a plastically or elastically deformable sealing material, which is, or are, held on the radial inner surface of the base element (4) and extends or extend, on the radial inner surface of the base body (4) along the circumference of a contact area in which the contact means are in electrically conductive connection with the outer conductor (24) of the coaxial cable (26), without interruption around the contact area in such a way that, in the installed position of the device (2), the contact area is sealed against the penetration of air and/or moisture.

2. Device according to claim 1, **characterised in that** the base element (4) has a clamp band (6) made of electrically conductive material, on which is formed at least one contact projection of electrically conductive material, which is formed as one piece with the clamp band, and which, in the installed position of the device (2), projects, in the radial direction of the coaxial cable (26), over the seal in such a way that it abuts against the outer conductor (24) of the coaxial cable and thus forms the contact connection.

3. Device according to claim 2, **characterised in that** the, or each, contact projection is formed by a tongue projecting toward the side of the base element (4) facing the coaxial cable (26) in the installed position.

4. Device according to claim 3, **characterised in that** the, or each, tongue is stamped out or cut out of the clamp band (6).

5. Device according to claim 4, **characterised in that** openings occurring in the clamp band (6) by forming the tongues are covered by a covering arranged on the radial outer side of the clamp band (6) in such a way that the openings are closed and the penetration of air and/or moisture through the openings into the contact area is avoided.

6. Device according to claim 1, **characterised in that** the contact means have a separate contact element (20) held on the base element (4).

7. Device according to claim 6, **characterised in that** the contact element (20) consists of a litz wire or of a braided band made of metal or of profiled sheet metal.

8. Device according to claim 1, **characterised in that** the base element (4) is formed as one piece and open in the circumferential direction and has, at its ends, tabs (8, 10) which are angled off or bent and which, in the installed position of the device (2), can be connected to one another by means of at least one screw (36).

9. Device according to claim 8, **characterised in that** means for limiting the screw-in path of the screw (36) are provided in such a way that, on tightening of the screw (36), compression of the seal (22) occurs in a defined manner.

10. Device according to claim 1, **characterised in that** the seal (22) consists of an elastomer.

11. Device according to claim 1, **characterised in that** the seal (22) consists of butyl, or a like plastically deformable sealing material.

## Revendications

1. Dispositif pour la mise en contact électriquement conductrice d'un conducteur extérieur dénudé par endroits d'un câble coaxial (26) qui est en retrait radialement par rapport à un gainage du câble coaxial, comportant un corps de base réalisé en tant que collier (2) pouvant être serré autour du câble coaxial, comportant une garniture d'étanchéité (22), formée en particulier par des lèvres d'étanchéité, par laquelle le corps de base, en position de montage du dispositif, s'applique de manière étanche contre le gainage du câble coaxial, et
comportant des moyens de contact pour réaliser une liaison électriquement conductrice entre le conducteur extérieur (24) du câble coaxial (26) et un conducteur, par exemple un câble de terre, **caractérisé en ce que** la garniture d'étanchéité (22) est constituée d'au moins une bande d'un matériau d'étanchéité déformable plastiquement ou élastiquement, qui est ou sont maintenues contre la surface intérieure radiale du corps de base (4) et s'étend ou s'étendent sur la surface intérieure radiale du corps de base (4), le long du pourtour d'une zone de contact dans laquelle les moyens de contact sont en liaison électriquement conductrice avec le conducteur extérieur (24) du câble coaxial, sans interruption autour de la zone de contact, de manière que la zone de contact, en position de montage du dispositif (2), soit rendue étanche contre une pénétration d'air et/ou d'humidité.

2. Dispositif selon la revendication 1, **caractérisé en ce que** le corps de base (4) comporte une bande formant collier (6) en matériau électriquement conducteur sur laquelle est réalisée au moins une saillie de contact réalisée d'une pièce avec la bande formant collier, en un matériau électriquement conducteur, qui, en position de montage du dispositif (2), dépasse dans la direction radiale du câble coaxial (26), de la garniture d'étanchéité de manière à s'appliquer contre le conducteur extérieur (24) du câble coaxial et forme ainsi les moyens de contact.

3. Dispositif selon la revendication 2, **caractérisé en ce que** la ou chaque saillie de contact est formée par une languette faisant saillie vers le côté du corps de base (4), tournée en position de montage vers le câble coaxial (26).

4. Dispositif selon la revendication 3, **caractérisé en ce que** la ou chaque languette est découpée ou estampée dans la bande formant collier (6).

5. Dispositif selon la revendication 4, **caractérisé en ce que** les ouvertures, obtenues par réalisation des languettes dans la bande formant collier (6), sont recouvertes par un couvercle disposé sur le côté extérieur radial de la bande formant collier (6), de manière que les ouvertures soient fermées et qu'une pénétration d'air et/ou d'humidité à travers les ouvertures soit évitée dans la zone de contact.

6. Dispositif selon la revendication 1, **caractérisé en ce que** les moyens de contact comportent un élément de contact (20) séparé, maintenu sur le corps de base (4).

7. Dispositif selon la revendication 6, **caractérisé en ce que** l'élément de contact (20) est constitué d'un fil torsadé ou d'une tresse en métal ou en tôle profilée.

8. Dispositif selon la revendication 1, **caractérisé en ce que** le corps de base (4) est réalisé d'une seule pièce et ouvert dans la direction périphérique et comporte, à ses extrémités, des pattes (8, 10) coudées ou repliées qui, en position de montage du dispositif (2), peuvent être reliées entre elles au moyen d'au moins une vis (36).

9. Dispositif selon la revendication 8, **caractérisé en ce que** sont prévus des moyens pour limiter la course de vissage de la vis (36) de manière qu'il se produise une compression de la garniture d'étanchéité (22), dans une mesure définie, lorsque l'on serre la vis (36).

10. Dispositif selon la revendication 1, **caractérisé en ce que** la garniture d'étanchéité (22) est constituée d'un élastomère.

11. Dispositif selon la revendication 1, **caractérisé en ce que** la garniture d'étanchéité (22) est constituée de butyle ou d'un matériau d'étanchéité similaire déformable plastiquement.
